**Europäisches Patentamt**

**European Patent Office**

**Office européen des brevets**

(19)

(11) Publication number : **0 514 478 B1**

(12)
# EUROPEAN PATENT SPECIFICATION

(45) Date of publication of patent specification :
20.09.95 Bulletin 95/38

(51) Int. Cl.⁶ : **H04N 1/40**

(21) Application number : **91904716.7**

(22) Date of filing : **30.01.91**

(86) International application number :
**PCT/US91/00576**

(87) International publication number :
**WO 91/12686 22.08.91 Gazette 91/19**

(54) **DIGITAL HALFTONING WITH CORRELATED MINIMUM VISUAL MODULATION PATTERNS.**

(30) Priority : **07.02.90 US 476090**
**29.05.90 US 540540**

(43) Date of publication of application :
**25.11.92 Bulletin 92/48**

(45) Publication of the grant of the patent :
**20.09.95 Bulletin 95/38**

(84) Designated Contracting States :
**DE FR GB**

(56) References cited :
**EP-A- 0 270 259**
**FR-A- 2 455 409**
**US-A- 4 533 941**
**US-A- 4 920 501**

(73) Proprietor : **EASTMAN KODAK COMPANY**
**343 State Street**
**Rochester, New York 14650-2201 (US)**

(72) Inventor : **RAY, Lawrence, A. Eastman Kodak**
**Co.**
**Patent Legal Staff,**
**343 State Street**
**Rochester, New York 14650-2201 (US)**
Inventor : **SULLIVAN, James, R., Eastman**
**Kodak Co.**
**Patent Legal Staff**
**343 State Street**
**Rochester, New York 14650-2201 (US)**

(74) Representative : **Parent, Yves et al**
**Kodak-Pathé**
**Département Brevets et Licences**
**Centre de Recherches et de Technologie**
**Zone Industrielle**
**B.P. 21**
**F-71102 Chalon sur Saône Cedex (FR)**

EP 0 514 478 B1

## Description

Technical Field

The present invention relates to the field of digital image processing and more particularly to a method for digital halftoning continuous-tone images using a correlated data base of minimum visual modulation bit-map patterns.

Background Art

Digital halftoning for the purpose of generating continuous-tone images has been practical since the mid-1960's (see "Picture Generation with a Standard Line Printer," by Perry and Mendelsohn, Comm. of the ACM, Vol. 7, No. 5, pp 311-313). The two major techniques in current use are dithering and error diffusion. See Digital Halftonina by Ulichney, MIT Press, Cambridge, Massachusetts, pp 77-79, 127, 239-240. The prime dithering techniques are random dither, clustered-dot dither, and dispersed-dot dither. Random dither was developed first, but it is rarely used because it produces the poorest quality image.

The other two dither techniques are used with clustered-dot being by far the most prevalent. They are both based upon on threshold screen pattern that is generally a fixed size., e.g., 8x8 image pixels, which is compared with the input digital image values. If the input digital value is greater than the screen pattern number, the output is set "on", i.e., 255 for an 8-bit input image, and if it is less, the output is set to "off" or 0. The difference between the two techniques is the lower threshold values, which are centered in the clustered-dot screen pattern, but scattered in the dispersed-dot screen pattern. The clustered-dot technique has a central dot that increases in size as the signal level increases and the dispersed-dot technique has small scattered dots that increase in number as the signal level increases. In both techniques the number of levels that can be represented is equal to the size of the pixels of the screen pattern, e.g., an 8x8 screen can produce 64 unique levels.

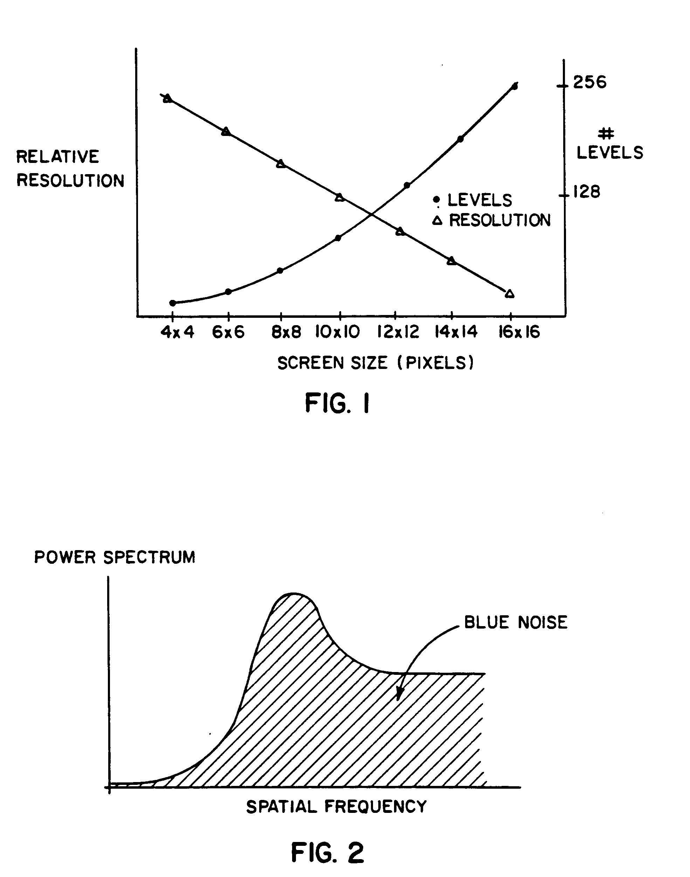

Larger patterns allow more levels, but also a reduction in the effective resolution because the transition between levels is at a coarser pitch. At the medium pixel rate of copiers and laser printers, e.g., 300-500 dots/inch, the pattern artifacts are visible for screen patterns larger than 4x4, and since 16 levels are inadequate precision for typical continuous-tone imagery a suboptimal resolution/level tradeoff is illustrated in Figure 1.

Error diffusion is fundamentally different from dither in that there is no fixed screen pattern, instead a recursive algorithm is used that attempts causally to correct errors made by representing the continuous input signal by binary values. The two major components are a matrix of fractions that weight past errors and a threshold operator based on the sum of those weighted errors and the current pixel that determines whether to output an "on" or an "off." The best error diffusion techniques are two-dimensional, meaning that the error is fed back from previous lines as well as previous pixels. The error feedback mechanism is usually linear in that the sum error is a linear combination of past errors, but the thresholding is nonlinear making the compound process nonlinear. Approximating thresholding as a signal-dependent gain, it can be shown that for positive error weights the output binary signal will be high-pass in uniform regions thus introducing "blue noise" into the image (see Ulichney, cited above). This "blue noise" spectrum is shown in Figure 2. As discussed by Ulichney, this "blue noise" is a very favorable feature because the perception of this noise will be reduced by the low--pass filtering of the visual system causing a higher perceived signal-to-noise ratio. Unfortunately, the error weights are indirectly related to this preferred noise characteristic and therefore provide suboptimal control, and for certain signal levels the causal feedback can become visually unstable generating correlated patterns or "worms" that are highly objectionable. The most common solution is modulating the weights randomly which reduces the "worms" but also increases the noise.

It is the object of the present invention to provide a new digital halftoning technique that improves the image quality over the aforementioned techniques for all classes of images of interest to a human observer. The approach is a combination of the minimal visual modulation patterns and the correlated clustered-dot algorithms.

Summary of the Invention

The objects of the present invention are achieved by designing and storing NxN pixel (e.g., 32x32), bit-map patterns for each density level in an image, that are correlated and have minimum visual noise within the constraints imposed by correlation, and modularly addressing those patterns with each pixel value and pixel location in the image. In a preferred mode of practicing the invention, the bit-map patterns are produced using a combinatorial minimization algorithm called stochastic annealing or simulated annealing and a human visual system MTF weighting function to weight the discrete Fourier Transform of each pattern to determine the perceived noise. Each pattern corresponding to an input signal is produced in a fashion such that it is correlated with previously produced patterns. The process for the correlation is based upon a binary tree. The order of pattern selection is made in such a way to maximize the degrees of freedom, yet to assure the patterns remain correlated. This approach will be described in detail below.

If the patterns are denoted with the notation p/q where p is the serial number of the pattern and q is the number of patterns in the series, then for an 8-bit signal having 256 possible signal levels pattern 0/256 consists of all pixels "off" and pattern 255/256 consists of all pixels "on." The order of selection of patterns is given by a binary search. The basic idea in this search is for patterns to be correlated, but not construct the sequence of correlations in a serial manner. The precise mathematical description of the correlation process is formally expressed. Let pattern p/256 be determined then previously determined patterns $p_{inf}$ and $P_{sup}$ which constrain the pattern selection process are selected according to the following algorithm:

Represent p in binary as $p = b_8b_7b_6b_5b_4b_3b_2b_1$ where $b_i$ is either a 0 or 1, and consider the representation as a character string. Let i be the smallest index such that $b_i = 0$ for $j \leq i$, and i = 0 if $b_1 = 1$. Let $z_i = 2^i$. The upper pattern is then $p_{sup} = p + z_i$ and the lower pattern is then $p_{inf} = p-z_i$. For instance, if p = 138 = 10001010, then i = 1, $z_1$ = 2 and $p_{inf}$ = 136 and $p_{sup}$ = 140.

Let $D_{inf}$ and $D_{sup}$ be the configuration of "on" dots in patterns $p_{inf}$ and $p_{sup}$ respectively. The optimization process described below is constrained to select a set of dots within minimum visual modulation such that all the "on" dots of $D_{inf}$ plus half of the positions of the set $D_{sup}-D_{inf}$ are "on". This method is suboptimal because the requirement that D contains all "on" dots of $D_{inf}$ will result in patterns which are unlikely to be optimal in a global sense. However, the advantage is that patterns are spatially correlated, so small changes in the input signal level do not introduce phase noise as patterns are transitioned. Moreover, the use of a binary tree to produce the patterns assures that the deviation from an optimal selection is minimized in comparison to a serial pattern generator, i.e., pattern (p+1)/256 is simply determined by adding 4 "on" dots to pattern p/256. The approach to correlation of dot patterns is similar to the approach taken by B. E. Bayer for dispersed-dot dither (see "An Optimal Method for Two-Level Rendition of Continuous-Tone Pictures," by B. E. Bayer, Proc. IEEE Int. Conf. Comm. Conference Record, pp (26-11)-(26-15)), in that once a dot is "on" it remains "on" throughout the sequence of patterns.

In order to begin the process, pattern 0/256 has all dots set to "off" and pattern 255/256 has all dots set to "on." For simplicity, pattern 255.256 is identified with pattern 256/256. The next pattern to be determined is pattern 128/256, where half the dots are in the "on" state.

To use the patterns for halftoning, it is assumed that a continuous-tone image is digitized into a 8-bit signal. For a digital image produced by scanning a continuous-tone image the process includes the following steps. For a given pixel value of the digital image signal, select the pattern which matches the input signal. The (x,y)-position of the digital input signal is modularly transformed to a position within the halftone pattern screen by (a,b) = (x mod32,y mod32). The state of the pattern at the position (a,b) is output to the printer.

Brief Description of Drawings

Figure 1 is a graph illustrating the resolution versus number of levels tradeoff of conventional fixed screen dither;

Figure 2 is a graph showing the "blue noise" spectrum of the high frequency noise that results from conventional fixed screen dither;

Figure 3 is a graph showing the human visual system transfer function used to weight the discrete Fourier Transform of the bit-map pattern in the stochastic annealing process;

Figure 4a is an example of an initial random bit-map pattern for a mean level of 1/8th or 128 'on' dots;

Figure 4b is an example of a final minimum cost bit-map pattern for a mean level of 1/8th or 128 'on' dots;

Figure 5 is a graph showing the relative visual error cost at each T value for the annealing process that generates the pattern in Fig. 4b;

Figure 6 is a block diagram showing the halftone image processing technique according to the present invention for constant tone graphics; and

Figure 7 is a diagram showing the addressing of the data base as the input image is processed.

Modes of Carrying Out the Invention

The method for generating a halftone image according to the present invention involves designing correlated minimum visual modulation patterns for each input pixel signal level, and modularly addressing the pattern to select bits to be used in the halftone image. The bit-map pattern design will be described first, followed by a description of the addressing and pattern selection process.

The goal of the invention is to minimize the visually perceived modulation for a pattern of zeroes and ones that on average represent a particular signal level. Moreover, the patterns must be sufficiently correlated in order to reduce any artifacts that occur because of shifts in the input signal level. The first aspect of the pattern generation criteria requires the definition of visual modulation or cost for a given pattern and a method for cost minimization. The second aspect of the pattern generation is to correlate the patterns such that small changes in input levels do not result in undesirable output signal modulation.

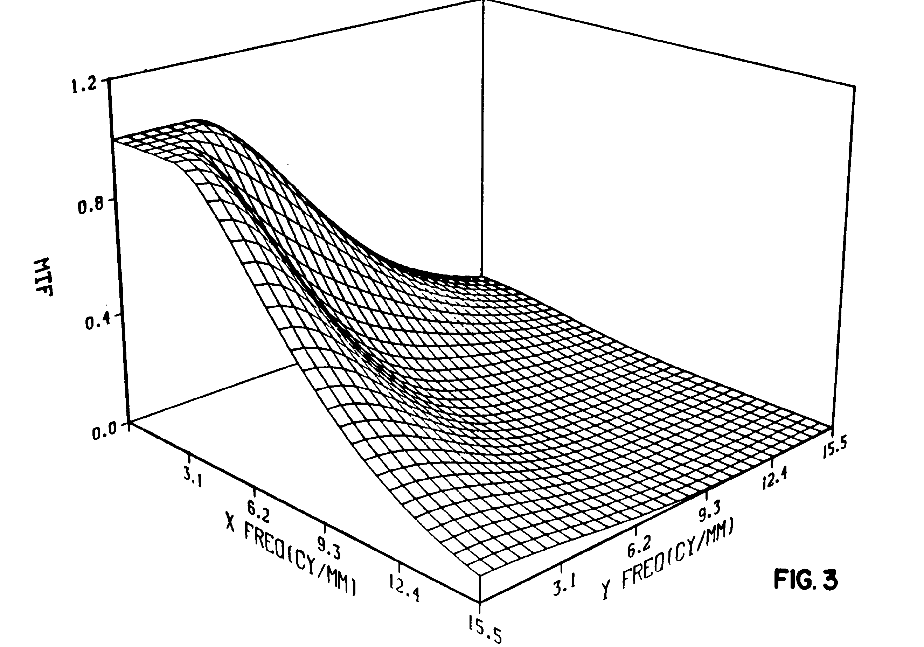

For normal viewing distance, i.e., 10 inches, the effective two-dimensional modulation transfer function, MTF, of the human visual system is shown in Figure 3. It shows the low-pass filter characteristic of the vision system and the loss of sensitivity at 45 degrees corresponding to the dip in the MTF surface at that angle. This function is given by:

$$V_{ij} = \begin{cases} a(b + c\tilde{f}_{v_{ij}}) \exp(-c\tilde{f}_{v_{ij}})^d & \text{if } f_{v_{ij}} > f_{max} \\ 1.0 & \text{elsewhere} \end{cases} \tag{1}$$

where the constants a,b,c, and d are calculated by regression fits of horizontal and vertical modulation data to be 2.2, 0.192, 0.114, and 1.1 respectively. $\tilde{f}_{v_{ij}}$ is the radial spatial frequency in cycles per degree of visual subtense, scaled for a given viewing distance, and $f_{max}$ is the frequency in cycles per degree at which the frequency $V_{ij}$ peaks $\tilde{f}_{v_{ij}}$ is calculated as:

$$\tilde{f}_{v_{ij}} = \frac{f_{v_{ij}}}{S_{ij}(\theta)}, \tag{2}$$

where

$$f_{v_{ij}} \text{(cycles/degree)} = \frac{\pi}{180 \arcsin\left(\frac{1}{\sqrt{1 + dis^2}}\right)} \left(f_i^2 + f_j^2\right)^{\frac{1}{2}}; \; i,j = 1,2,\dots,32 \; ,$$

where dis is the viewing distance in mm,

$f_i = (i-1)/\Delta N$   = horizontal on a document in cycles/mm
$f_j = (j-1)/\Delta N$   = vertical on a document in cycles/mm
$N$   = 32,

$\Delta$   = dot spacing on a document, e.g., 0.0625mm,
$S_{ij}$   = 0.5(1-w) cos(4$\theta$) + 0.5(1+w); (3) where w is the bandwidth parameter
$\theta$   = arctan($f_j/f_i$).

To evaluate the cost for a particular NxN bit pattern, the modulus of the discrete Fourier Transform (DFT) of the pattern is calculated and multiplied by the visual MTF and summed. That is

$$cost = \sum_{i=1}^{N} \sum_{j=1}^{N} V_{ij} \sqrt{P_{ij} P_{ij}^*} \tag{4}$$

where i,j and x,y spatial frequency indices with i,j=N representing the output binary pixel rate, $V_{ij}$ is the visual MTF scaled to the output pixel rate, $P_{ij}$ is the pattern DFT, and * represents complex conjugation. The Fourier domain was chosen for the minimization because the DFT assumes the input is periodically replicated in a tile fashion over all space which is consistent with the modular addressing of the pattern to be described below.

A 32x32 region is preferred to allow sufficient degrees of freedom in the Fourier domain to shape the noise into a "blue-noise" spectrum as in Figure 2 without the excessive complexity of larger areas, and it easily accommodates the 256 levels on an 8-bit input signal with each level corresponding to four "on" dots. However, other size patterns, such as 8x8 or 16x16 can be employed with the present invention.

If pattern p/256 is to be determined, then the number of combinations that may occur is:

$$\binom{4(p_{sup} - p_{inf})}{2(p_{sup} - p_{inf})} = \frac{(4(p_{sup} - p_{inf}))!}{(2(p_{sup} - p_{inf}))!\,(2(p_{sup} - p_{inf}))!} \qquad (5)$$

which is a very large number in all but a few cases. To overcome this combinatorial problem a stochastic minimization method called stochastic annealing or simulated annealing was used (see for example, "Stochastic Relaxation, Gibbs Distributions, and Bayesian Restoration of Images," by S. German and D. German, IEEE Trans. on PAMI, Vol PAMI-6, No. 6, Nov. 1984, pp.721-741). The key feature of this iterative technique as compared to more traditional minimization techniques such as steepest descent is that local minima can be escaped by accepting cost increases at each iteration with a decreasing but greater than zero probability. In order to insure correlation between patterns the following constraint is added to the stochastic annealing process:

Let

$D_{sup}$ = {"on" dots in the upper bounding pattern}
$D_{inf}$ = {"on" dots in the lower bounding pattern}
$D$ = $D_{sup} - D_{inf}$

Patterns are correlated by selectively combining the lower pattern and the upper pattern to create an intermediate pattern, i.e., $D_{inf}$ + 1/2D. If a pattern p/256 is to be determined then the algorithm previously described specifies the boundary patterns.

The minimization process includes the following steps:

1) Initialize a given density level pattern by adding to the set $D_{inf}$ half of the elements in the set D. The selection of the elements of D is random;

2) Calculate cost using equation (4);

3) Randomly switch a pair of "on/off" in the set D dots and calculate a new cost using equation (4);

4) Calculate a test statistic q for determining whether the new pattern is from a lower cost random process given by:

$$q = \exp(\frac{-\Delta cost}{T})$$

where $\Delta cost$ = [new cost] - [previous cost], and T is a normalization parameter initially set such that a large percentage, e.g., 80% of new patterns will be judged to be from a lower cost random process even if the $\Delta cost$ is greater than zero;

5) If q>1, i.e., $\Delta cost$ <0, accept the new pattern; if q≦1, accept the pattern if ξ≦q, where ζ is a uniform psuedo-random number between 0 and 1, and reject the new pattern and revert to the previous pattern if ζ>q;

6) After many loops of steps 3-5, i.e., 1500, decrease T to κT where κ<1, i.e., 0.95, and go to step 3 so positive $\Delta cost$ values are accepted with geometrically decreasing likelihood as the search proceeds;

7) Stop when the cost at successive decreases in T are no longer changing or when a fixed number of decreases have occurred, e.g., 300.

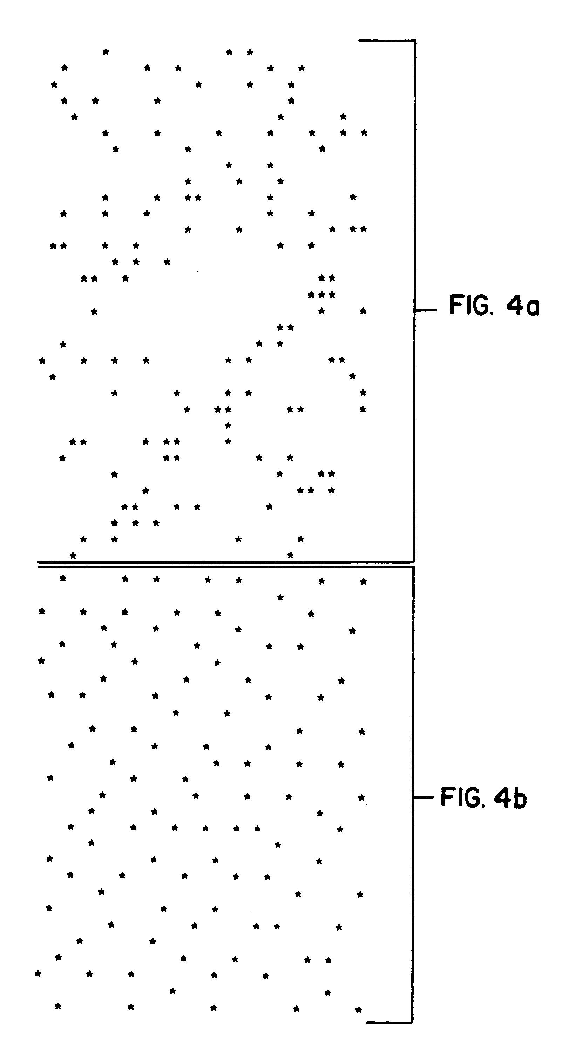

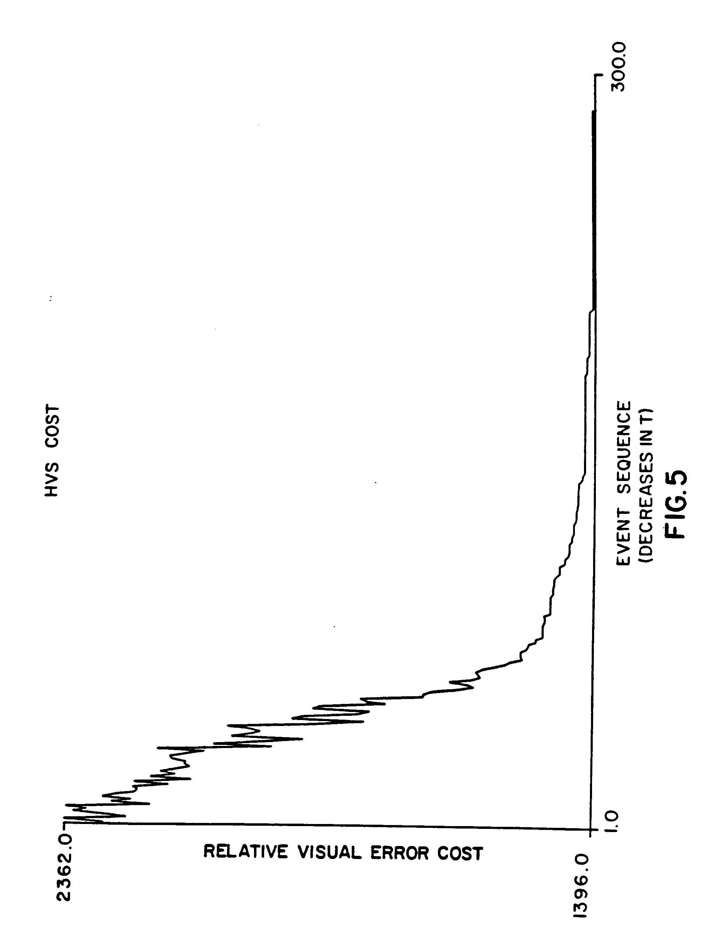

Figures 4a and 4b show the "on" pixel patterns for the initial quasi-random pattern and the final minimum cost pattern for a mean level of 1/4th or 256 dot "on" dots that resulted in a single run of this process. As the figures show the final pattern appears random, but in fact is more spatially regularized without large gaps or clumps which lead to undesirable low frequency modulation. Figure 5 shows the progression of cost estimates at each decrease in T with each temporary dip in the curve being a local minimum from which the minimization process escaped. In addition, empirical results indicate that multiple runs produce slightly different final patterns due to the inherent randomness of the search process and that better results can be achieved by selecting the pattern with the lowest final cost from a number of independent searches with the same initial conditions. The number of searches is proportional to the number of levels which have already been decided. In particular, a larger number of runs are made for pattern 128 as compared to pattern 28.

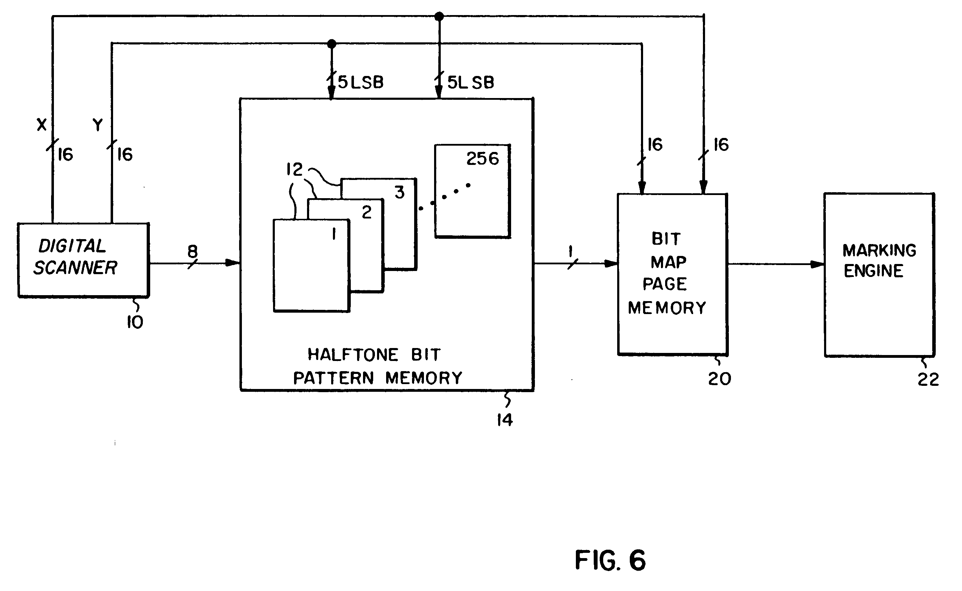

Referring to Figure 6, the method of generating a halftone image according to the present invention is illustrated schematically. A digital monochrome image is generated by an input device such as a digital scanner 10. The digital image is supplied as an 8-bit input signal with each pixel represented by one of 256 input levels.

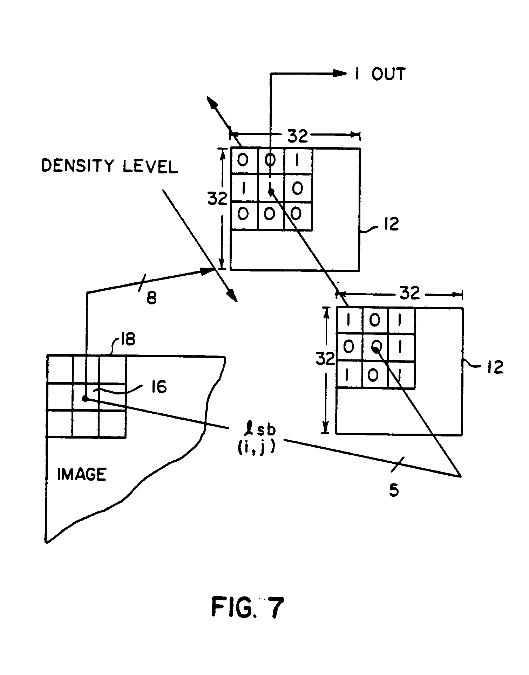

As illustrated schematically in Figure 7, the (x,y) location of the pixel 16 on a page 18 is identified by two 16-bit words. Two hundred-fifty-six 32x32 bit halftone patterns 12 generated on the supercomputer as previously described are stored in a bit pattern memory 14 (see Fig. 6). The 8-bit density level for a pixel from the input signal is employed to select the halftone dot pattern 12 from the pattern data-base. The five least significant bits of the x and y location address is employed to address the location in the pattern table 12, and the halftone bit is stored in the page memory 20 (see Fig. 6) at the indicated pixel location.

When the page memory 20 is full or the image is completed, the contents are supplied to a binary marking engine 22, such as a laser or ink jet printer. Alternatively, if the input is synchronized with the marking engine, the output of the bit pattern memory may be supplied directly to the marking engine without the need for a bit map page memory 20.

The halftone dot pattern generation steps of the halftone image generation process described with reference to Figure 6 is implemented simply by a programmable read-only-memory 14 in which the halftone bit patterns are stored.

Industrial Applicability and Advantages

The halftoning technique of the present invention is useful in systems that generate binary outputs from continuous-tone input images or computer generated graphics. The invention has the advantage that it does not have the periodic patterns of dithering or correlated directional noise of error diffusion. The method has implementation advantages over error diffusion because it does not require any arithmetic operations other than modulo arithmetic which can be easily performed by a simple bit masking operation. The reason for this is because the data base is accessed by a simple addressing scheme, whereas error diffusion involves weighting the differences between input and output values which are not binary. Additionally, the halftoning scheme of the present invention requires less storage than error diffusion.

**Claims**

1. A method of generating a halftone image with an electronic digital computer, characterized by the steps of:

   a) providing a set of correlated minimal visual noise NxN binary patterns, determined by employing a stochastic minimization technique, a human visual system modulation transfer function (MTF) weighting, and a constraint in the stochastic minimization technique that limits the possible patterns to those that are correlated, to generate a halftone bit pattern for each density level of the multilevel digital input signal, the patterns being correlated in a manner that reduces visual noise resulting from transitions between patterns, each pattern corresponding to a possible density level of a multiple level digital input signal;

   b) providing a digital image having pixel values representing density levels; and

   c) for each pixel value of the digital image signal, modularly selecting a portion of the binary bit pattern from the corresponding pattern of the set by addressing the bit pattern with lower significant bits of an (x,y) pixel address associated with each pixel and employing the selected bits to form a halftone image.

2. The method claimed in claim 1, wherein the digital image signal is provided by a computer programmed to generate graphic images.

3. The method claimed in claim 1, wherein the patterns are sufficiently correlated that noise caused by switching between adjacent patterns is below the visibility threshold.

4. The method claimed in claim 1, wherein the stochastic combinatorial minimization technique is stochastic annealing.

5. The method claimed in claim 4, wherein the stochastic annealing process characterized by the steps of:

   a) determining the sets $D_{inf}$, $D_{sup}$ and D from the boundary patterns $P_{inf}$, $P_{sup}$, where

   $D_{inf}$ = "on" dots in the lower boundary pattern

   $D_{sup}$ = "on" dots in the upper boundary pattern

   D = $D_{sup}$ - $D_{inf}$ in a set-theoretic sense.

   b) initializing a pattern with the "on" dots in set $P_{inf}$ and a random selection of half the dots in the set D so the total number of "on" dots is proportional to the density level of the pattern;

c) defining subsets $D_{on}$ and $D_{off}$ of D, where $D_{on}$ is the set of dots in D that are set "on" in the current pattern, and $D_{off}$ is the set of dots in D that are set "on" in the current pattern;

d) calculating a cost function according to the equation

$$cost = \sum_{i=1}^{N} \sum_{j=1}^{N} V_{ij} \sqrt{P_{ij} P_{ij}^{*}}$$

where i,j and x,y spatial frequency indices, representing the output pixel rate, $V_{ij}$ is a visual MTF scaled to the output pixel rate, $P_{ij}$ is the discrete Fourier Transform (DFT) of the pattern, and $*$ represents complex conjugation;

e) randomly switching a pair of elements from set $D_{on}$ and $D_{off}$ to form a new pattern and calculating a new cost function according to step d;

f) calculating a test statistic q to determine if the new cost is from a lower cost random process, given by

$$q = \exp(\frac{-\Delta cost}{T})$$

where $\Delta cost$ = [new cost] - [current cost], and T is a normalization parameter initially set such that a about 80% of new patterns will be determined to be from a lower cost random process even when $\Delta cost$ is greater than zero;

g) replacing the random pattern with the new pattern if q>1 or if q$\leq$1 and $\zeta$<q where $\zeta$ is a uniform psuedo-random number between 0 and 1, otherwise, reject the new pattern and retain the current pattern;

h) repeating steps e) through g) about 1500 times; and

i) decreasing T to $\kappa$T where $\kappa$<1 (e.g., 0.95) and repeating steps e) through h) until the cost of successive decrease in T are no longer changing or until about 300 decreases in T have occurred.

6. The method claimed in claim 1, wherein the bit patterns are the same resolution as the digital image, and the selected portion of the bit pattern is one bit.

7. The method claimed in claim 1, wherein the bit patterns are of higher resolution than the digital image, and the selected portion of the bit pattern is a block of bits.

8. The method claimed in claim 1, wherein the bit patterns are 32x32 bits.

9. The method claimed in claim 8, wherein the modularly selecting step characterized by employing the five lower significant bits of an 8-bit (x,y)-pixel address to address a bit pattern memory.


**Patentansprüche**

1. Verfahren zum Erzeugen eines Rasterbildes mittels eines Digitalrechners, <u>gekennzeichnet durch</u> folgende Schritte:

a) Erzeugen eines Satzes korrelierter, visuell minimal wahrnehmbarer binärer NxN-Rauschmuster, die bestimmt sind durch die Anwendung eines stochastischen Minimierungsverfahrens, einer Modulationsübertragungsfunktions (MÜF)-Gewichtung eines humanvisuellen Systems, und einer Zwangsbedingung im stochastischen Minimierungsverfahren, bei der die möglichen Muster auf die korrelierten beschränkt sind, um ein Rasterbitmuster für jede Dichtestufe des Multilevel-Digitalausgangssignal zu erzeugen, wobei die Muster derart korreliert werden, daß das sich aus den Übergängen zwischen den einzelnen Mustern ergebende visuelle Rauschen reduziert wird, und wobei jedes Muster einer durch ein Multilevel-Digitalausgangssignal darstellbaren Dichtestufe entspricht;

b) Erzeugen eines Digitalbildes mit Dichtestufen darstellenden Pixelwerten; und

c) Modulares Auswählen einer Teilmenge des Binärbitmusters vom entsprechenden Muster des Satzes für jeden Pixelwert des digitalen Bildsignals durch Adressieren des Bitmusters mittels der geringerwertigen Bits einer jedem Pixel zugeordneten (x-, y-) Pixeladresse und durch Verwenden der ausgewählten Bits zur Erzeugung eines Rasterbilds.

2. Verfahren nach Anspruch 1, dadurch gekennzeichnet, daß das digitale Bildsignal von einem zur Erzeugung von Bildgrafiken programmierten Rechner erzeugt wird.

3. Verfahren nach Anspruch 1, dadurch gekennzeichnet, daß die Muster so weitgehend korreliert sind, daß das durch den Wechsel zwischen benachbarten Mustern verursachte Rauschen unterhalb der Sichtbarkeitsschwelle liegt.

4. Verfahren nach Anspruch 1, dadurch gekennzeichnet, daß es sich bei dem stochastischen kombinatorischen Minimierungsverfahren um eine stochastische Homogenisierung handelt.

5. Verfahren nach Anspruch 4, dadurch gekennzeichnet, daß der stochastische Homogenisierungsprozeß durch folgende Schritte gekennzeichnet ist:

a) Bestimmen der Sätze $D_{inf}$, $D_{sup}$ und D aus den Grenzmustern $P_{inf}$, $P_{sup}$, wobei

$D_{inf}$ = "ein"-Punkte im unteren Grenzmuster

$D_{sup}$ = "ein"-Punkte im oberen Grenzmuster

D = $D_{sup}$ - $D_{inf}$ im Sinne eines Satztheorems;

b) Initialisieren eines aus "ein"-Punkten des Satzes Pinf und einer zufallsbestimmten Hälfte der Punkte des Satzes D gebildeten Musters, so daß sich die Gesamtzahl der "ein"- Punkte proportional zur Dichtestufe des Musters verhält;

c) Bestimmen untergeordneter $D_{ein}$ und $D_{aus}$-Sätze von D, wobei Dein derjenige Satz von Punkten in D ist, die im aktuellen Muster wirksam sind, und $D_{aus}$ derjenige Satz von Punkten in D ist, die im aktuellen Muster unwirksam sind;

d) Berechnen einer Aufwandsfunktion nach der Gleichung

$$\text{Aufwand} = \sum_{i=1}^{N}\sum_{j=1}^{N} V_{ij} \sqrt{P_{ij} P_{ij}^{*}}$$

worin i, j und x, y Raumfrequenzindices sind, die die Ausgangspixelrate darstellen, $V_{ij}$ eine für die Ausgangspixelrate bemessene visuelle MÜF, $P_{ij}$ die diskrete Fouriertransformation (DFT) des Musters, und ∗ eine komplexe Zuordnung bedeuten;

e) Zufallsbestimmtes Vertauschen zweier Elemente aus den Sätzen $D_{ein}$ und $D_{aus}$, um ein neues Muster zu erzeugen und Berechnen einer neuen Aufwandsfunktion nach Schritt d;

f) Berechnen einer Prüfgröße q, um zu ermitteln, ob die neue Aufwandsfunktion aus einem Zufallsprozeß geringeren Aufwands stammt, mittels der Gleichung -

$$q = \exp\frac{-\Delta \text{Aufwand}}{T}$$

worin $\Delta$ Aufwand = neuer Aufwand - aktueller Aufwand ist, und T einen Normierungsparameter darstellt, der anfänglich so festgelegt ist, daß etwa 80 % der neuen Muster als von einem Zufallsprozeß geringeren Aufwands stammend ermittelt werden, selbst wenn $\Delta$ Aufwand > 0 ist;

g) Ersetzen des Zufallsmusters durch das neue Muster, wenn q > 1 oder wenn q < 1 und $\zeta$ < q ist, wobei $\zeta$ eine gleichbleibende Pseudo-Zufallszahl zwischen 0 und 1 ist, andernfalls das neue Muster zu verwerfen und das aktuelle Muster beizubehalten ist;

h) ungefähr 1500faches Wiederholen der Schritte e) bis g); und

i) Vermindern von T zu $\kappa$T, wenn $\kappa$ < 1 (z.B. 0,95) und Wiederholen der Schritte e) bis h), bis sich die Aufwandsfunktion bei nacheinander erfolgtem Vermindern von T nicht mehr ändert oder bis etwa 300 Verminderungsvorgänge von T erfolgt sind.

6. Verfahren nach Anspruch 1, dadurch gekennzeichnet, daß die Bitmuster die gleiche Auflösung wie das Digitalbild besitzen und die ausgewählte Teilmenge des Bitmusters ein Bit beträgt.

7. Verfahren nach Anspruch 1, dadurch gekennzeichnet, daß die Bitmuster eine höhere Auflösung als das Digitalbild besitzen und die ausgewählte Teilmenge des Bitmusters ein Bitblock ist.

8. Verfahren nach Anspruch 1, dadurch gekennzeichnet, daß die Bitmuster aus 32 x 32 Bits bestehen.

9. Verfahren nach Anspruch 8, wobei der modulare Auswählschritt durch Verwendung der fünf geringerwertigen Bits einer 8-Bit-(x, y-)Pixeladresse gekennzeichnet ist, um einen Bitmusterspeicher zu adressieren.

**Revendications**

1. Procédé pour créer une image tramée avec un ordinateur numérique électronique, caractérisé par les étapes consistant à :

   a) procurer un jeu de motifs binaires N x N à bruit visuel minimum corrélé, déterminé par l'emploi d'une technique de minimisation stochastique, d'une pondération par fonction de transfert de modulation (MTF) du système visuel humain, et d'une contrainte dans la technique de minimisation stochastique qui limite les motifs possibles à ceux qui sont corrélés, de façon à créer un motif de bits tramé pour chaque niveau de densité du signal d'entrée numérique multi-niveaux, les motifs étant correlés d'une façon qui réduit le bruit visuel résultant des transitions entre motifs, chaque motif correspondant à un niveau de densité possible d'un signal d'entrée numérique à niveaux multiples,

   b) procurer une image numérique présentant des valeurs de pixels représentant des niveaux de densité, et

   c) pour chaque valeur de pixel du signal d'image numérique, choisir de façon modulaire une partie du motif de bits binaire à partir du motif correspondant du jeu, en adressant les motif de bits à l'aide des bits de poids faible d'une adresse de pixels (x, y) associée à chaque pixel et en utilisant les bits choisis pour former une image tramée.

2. Procédé selon la revendication 1, dans lequel le signal d'image numérique est fourni par un ordinateur programmé pour créer des images graphiques.

3. Procédé selon la revendication 1, dans lequel les motifs sont correlés suffisamment pour que le bruit causé par le passage entre motifs adjacents soit en dessous du seuil de visibilité.

4. Procédé selon la revendication 1, dans lequel la technique de minimisation combinatoire stochastique est une homogénéisation stochastique.

5. Procédé selon la revendication 4, dans lequel le processus d'homogénéisation stochastique est caractérisé par les étapes consistant à :

   a) déterminer les ensembles $D_{inf}$, $D_{sup}$ et D à partir des motifs limites $D_{inf}$, $D_{sup}$, dans lesquels

   $D_{inf}$ = points "actifs" dans le motif de limite inférieure

   $D_{sup}$ = points "actifs" dans le motif de limite supérieure

   $D = D_{sup} - D_{inf}$ au sens de la théorie des ensembles.

   b) initialiser un motif avec les points "actifs" dans l'ensemble $P_{inf}$ et un choix aléatoire d'une moitié des points de l'ensemble D de sorte que le nombre total de points "actifs" soit proportionnel au niveau de densité du motif,

   c) définir des sous-ensembles $D_{actif}$ et $D_{inactif}$ de D, où $D_{actif}$ est l'ensemble des points de D qui sont établis "actifs" dans le motif actuel et Dinactif est l'ensemble des points de D qui sont établis "actifs" dans le motif actuel,

   d) calculer une fonction de coût conformément à l'équation

$$\text{coût} = \sum_{i=j}^{N} \sum_{i=j}^{N} V_{ij}\sqrt{P_{ij}P_{ij}^{*}}$$

   où i, j et x, y sont des indices de fréquence spatiale représentant le taux de pixels de sortie, $V_{ij}$ est une fonction de transfert de modulation proportionnée au taux de pixels de sortie, $P_{ij}$ est la transformée de Fourier discrète (DFT) du motif, et $*$ représente le nombre complexe conjugué,

   e) échanger de façon aléatoire une paire d'éléments à partir des ensembles $D_{actif}$ et $D_{inactif}$ pour former un nouveau motif et calculer une nouvelle fonction de coût conformément à l'étape d,

   f) calculer une valeur statistique de test q de façon à déterminer si le nouveau coût est issu d'un processus aléatoire de coût inférieur, donné par l'équation

$$q = \exp\left(\frac{-\Delta\,\text{coût}}{T}\right)$$

où $\Delta$ coût = [nouveau coût] - [coût actuel], et T est un paramètre de normalisation établi initialement d'une façon telle qu'environ 80 % des nouveaux motifs seront déterminés comme étant issus d'un processus aléatoire de coût inférieur même lorsque $\Delta$ coût est plus grand que zéro,

g) remplacer le motif aléatoire par le nouveau motif si q > 1 ou si q $\leqq$ 1 et $\zeta \leqq$ q où $\zeta$ est un nombre pseudo-aléatoire uniforme entre 0 et 1, sinon, rejeter le nouveau motif et retenir le motif actuel,

h) répéter les étapes e) à g) environ 1 500 fois, et

i) faire décroître T à $\kappa$T dans lequel $\kappa$ < 1 (par exemple, 0,95) et répéter les étapes e) à h) jusqu'à ce que le coût des décroissances successives de T ne change plus ou jusqu'à ce qu'environ 300 décroissances de T se soient produites.

6. Procédé selon la revendication 1, dans lequel les motifs de bits ont la même résolution que l'image numérique et la partie choisie du motif de bits est de un bit.

7. Procédé selon la revendication 1, dans lequel les motifs de bits sont d'une résolution supérieure à l'image numérique et la partie choisie du motif de bits et un bloc de bits.

8. Procédé selon la revendication 1, dans lequel les motifs de bits sont de 32 x 32 bits.

9. Procédé selon la revendication 8, dans lequel l'étape de choix modulaire caractérisée par l'emploi des cinq bits de poids faible d'une adresse de pixels à 8 bits (x, y) pour adresser une mémoire de motifs de bits.

RELATIVE
RESOLUTION

256

\#
LEVELS

128

• LEVELS
△ RESOLUTION

4x4  6x6  8x8  10x10  12x12  14x14  16x16

SCREEN SIZE (PIXELS)

## FIG. 1

POWER SPECTRUM

BLUE NOISE

SPATIAL FREQUENCY

## FIG. 2

FIG. 3

FIG. 4a

FIG. 4b

FIG.5

FIG. 6

EP 0 514 478 B1

**FIG. 7**